# EUROPEAN PATENT SPECIFICATION

(11) **EP 1 985 677 B1**
(45) Date of publication and mention of the grant of the patent: **12.05.2010**
(21) Application number: 07008398.5
(22) Date of filing: 25.04.2007
(51) Int. Cl.: C09J 7/02, B32B 7/12, B32B 27/10, G09F 3/02

(54) **Adhesive transparent paper/film laminates**
Klebende, transparente Papier-/Folienlaminate
Laminés de papier/film transparent adhésif

(43) Date of publication of application: 29.10.2008
(73) Proprietor: Sihl GmbH, 52355 Düren (DE)
(72) Inventor: Buchbinder, Elisabeth, 52385 Nideggen (DE); Niemöller, Axel, 52355 Düren Niederau (DE)
(74) Representative: Polypatent

(56) References cited:
- US-A- 4 358 494
- US-A- 5 686 180
- US-A1- 2004 180 169

## Description

### TECHNICAL FIELD

The present invention relates to adhesive transparent 3-ply laminates comprising an adhesive layer, one polymer film and two paper layers. These kinds of laminates may be used for tags, tickets, labels, cards, envelopes, sealing tapes, baggage tags, graphic application and packaging material applications.

### BACKGROUND ART

For the purpose of labelling removable opaque pressure sensitive adhesive papers are known. These papers are commercialized, for example, by the 3M company under the trademark Post-it. From the same company also removable colourless or even coloured transparent sheets made of plastic are known for the same purpose.

The above labelling sheets have the disadvantage that they are either opaque and thus not suitable for the labelling of documents in cases where text below the label still needs to be readable or they have the disadvantage that they are of plastic and thus are not writable with all kinds of pencil, for example fluorescent markers. The FR 2847585 A1 solves these problems with the proposal of a coloured transparent paper sheet being coated with a pressure sensitive adhesive. The FR 2847585 A1 refers to the WO 99/02774 where the transparent papers and their preparation are described in more detail.

The EP 1159724 B1 relates to labelling tags having a layer of cold-seal adhesive usable by airline companies to identify luggage items. These labelling tags have a reverse layer selected from paper or polymer films, a printable layer and a cold-seal adhesive layer. The labelling tags are opaque.

US 2004/0180169 relates to decorative adhesive articles comprising a polymeric layer, a lightweight paper layer and an adhesive layer.

All of the above adhesive labelling sheets or tags have disadvantages. Either they are opaque and thus not usable for many applications where transparency is required. Or they are transparent but made of plastic and thus not writeable with all kinds of pencil. Or they are transparent and writeable but not tear resistant and robust.

Especially the transparent writeable papers have the disadvantage that they are extremely sensitive towards humidity due to the strong grinding of their paper fibres which is necessary in order to get the transparent outlook of the finished paper. Consequently, there are problems in the industrial coating of these papers with solvent borne or even water based coating compositions.

Therefore it was the object of the present invention to provide labelling sheets or tags which overcome all of the above problems. That is to provide labelling sheets or tags which are transparent, writeable with all kinds of pencil or printable by inkjet-printers, thermal-transfer-printers, or laser-printers with solid or liquid toners and which are tear resistant, robust and tolerant against humidity.

### SUMMARY OF THE INVENTION

The above object is met by an adhesive transparent laminate according to claim 1, i.e. by an adhesive transparent 3-ply laminate comprising an adhesive layer, one polymer film and two paper layers, wherein the polymer film and the paper layers being in an alternating manner permanently attached to each other by a film forming adhesive.

The laminate of the invention is a 3-ply laminate having two paper layers on the outside - one being coated with the adhesive layer - and one transparent polymer film as a centre layer of the laminate.

The advantage of these kinds of transparent laminates is that due to the polymer film - or films - which stabilizes the paper layers it is possible to use less paper fibres in order to provide transparency of the paper layers. A strong grinding of the paper fibres is then not necessary. This again makes the paper layers more resistant against humidity and allows it to apply water or solvent based adhesive coatings to the laminates of the invention, either on an outside polymer film layer or paper layer, respectively. Furthermore, the polymer film leads to high mechanical strength of the laminate, particularly if biaxially oriented films are used. The lamination is achieved by standard lamination processes, preferably by the roll-to-roll laminating process as described in EP 1 586447 A1.

"Transparent" in the sense of the present invention means that the laminates have a minimum transparency according to ISO 2471 of 40%, preferably a minimum of 60 %.

In preferred embodiments of the invention the adhesive layer is a removable pressure sensitive adhesive layer. "Removable" in the sense of the present invention means that the label can be removed without residues from the adhered surfaces after several days or even weeks. The adhered surface might be glass, paper/cardboard with either rough, calandered or coated surfaces or films like polyethylene, polystyrene, polypropylene, polyester, cellulose acetate, biodegradable films depending on the application. A typical adhesive system used is based on acrylic or polyvinylacetate polymers or copolymers and/or mixtures thereof. It can be either solvent or water based. This type of adhesive layer typically has a low dry coating weight in the range of 3 to 20 g/m², preferably 3 to 12 g/m².

In one particularly preferred embodiment of the invention the adhesive layer is a permanent or removable pressure sensitive adhesive layer, wherein the adhesive system is preferably a water based acrylic and/or methacrylic, herein also described as "(meth)acrylic", copolymer having a glas transition temperature measured by differential Scanning Calorimetry (DSC) of between -45 to -25°C, preferably -40 to -30°C. The average particle size of the dispersed copolymer particles is between 100 and 350, preferably between 180 and 280 nm. This type of adhesive layer typically has a coating weight in the range of 10 to 40 g/m², preferably in the range of 15 to 25 g/m². The peel adhesion on glass according to FTM1 (FINAT Test Method 1; FINAT, The Hague Netherlands, is a well known organisation that promotes the interests of the self adhesive labelling industry) after 20 min is typically between 10 N/25mm to 20 N/25mm for permanent pressure sensitive adhesives and 0,2 N/25mm to 10 N/25mm for removable pressure sensitive adhesives. The shear resistance on stainless steel according to FTM8 (FINAT Test Method 8) is above 6000 minutes, preferably above 8000 minutes.

In an alternative embodiment of the invention the adhesive layer is a solvent based permanent pressure sensitive adhesive layer. The adhesive system preferred is a self crosslinking solvent based acrylic polymer or copolymer that cures at moderate temperatures upon complete solvent removal. This type of adhesive layer typically has a coating weight in the range of 10 to 40 g/m², preferably in the range of 15 to 25 g/m². The peel adhesion on glass according to FTM1 (FINAT Test Method 1) after 20 min is typically between 10N/25mm to 20N/25mm.

In still another embodiment of the invention the adhesive layer is a cold seal adhesive layer. In a typical embodiment the cold seal adhesive layer is based on mixtures of natural or synthetic latex dispersions and one or more of the dispersions selected from the group comprising an aqueous polyacrylic dispersion, a poly(meth)acrylate dispersion, an acrylate and/or methacrylate based copolymer dispersion. A typical example is a cold seal adhesive composition containing 50-65 % by weight, preferably 55-60 % by weight, of a natural latex emulsion, preferably with an ammonia content giving pH values of appr. 10, 20-50 % by weight, preferably 30-40 % by weight of a styrene-acrylate emulsion, and small (1-5% by weight) amounts of wetting agents, latex stabilizers, antioxidants, biocides, thickeners, and, optionally, tackifiers. Some examples of cold seal adhesives based on natural latex emulsion and aqueous polyacrylate dispersions are described in US-A 5,070,164, US-A 4,898,787 and US-A 4,888,395. This type of adhesive layer typically has a dry coating weight in the range of 2-25 g/m², preferably in the range of 5 to 15 g/m².

In a further embodiment of the invention the adhesive layer is a hot seal adhesive layer. In such embodiments the hot seal adhesive layer is based on polyacrylate polymers or copolymers, ethylene vinyl acetate polymers or copolymers and/or mixtures thereof, either solvent or water based. The sealing range is between 60-140°C, preferably 80-120°C.

Laminates according to the invention having cold seal or hot seal adhesive layers can be used in tag and packaging applications where the use of transparent materials together with a paper surface is preferred.

The laminates according to the invention may additionally have a release liner which protects the adhesive layer. In these embodiments a removable adhesive layer or a pressure sensitive adhesive layer may be protected by such a release liner. The release liner is typically a siliconized paper or film.

In a certain embodiment of the invention the laminate further comprises a release coating on that side of the laminate not having the adhesive layer. A release coating is a coating which prevents the adhesive layer to stick too tight at the opposite layer of the laminate in case the laminate is furled. In other words the release coating prevents blocking during unwinding of the laminate from a roll. In cases where a release coating is present the above described release liner can be omitted, of course.

The release coating is prepared by applying a composition comprising an organic antiblocking agent selected from polyamides, amide waxes, montan waxes, polyolefin waxes, ester waxes, calcium stearate, zinc stearate, polyvinyl esters, polyacrylate copolymers, fatty acid esters, long chain alkyl products, polysaccharides, polysiloxanes and mixtures thereof.

In a certain embodiment of the invention the adhesive layer is only partially disposed on the laminate surface, namely in one or more regions of said laminate surface. This way of coating has several advantages. Depending from the application the adhesive force is only necessary in certain areas of the label or tag. Therefore it is more cost effective to work with only a partially coating. Another application where spot coating is advantageous is in case that the tags or labels are converted in reel format. If the adhesive free zones are at the edges of the roll no adhesive bleed at the edges may disturb the application.

In specific embodiments for special applications one or more functional layers or coatings can be located between two layers and/or between one of the outer layers and the adhesive disposed on that layer. The functional layer(s) and/or coating(s) can either be additional layer(s) and/or coating(s) located elsewhere in the laminate of the invention or can be the adhesive layer, the one polymer film, the one or two paper layer(s) and/or the film forming adhesive(s) itself as described above provided that the latter layer(s)/film(s)/adhesive(s) are further functionalized, for example by adding functional agents to said layer(s)/film(s)/adhesive(s). Of course, the final laminate still has to be an adhesive transparent laminate in the sense of the present invention. In the following the above general description of these specific embodiments is illustrated by certain examples.

The term "functional layer or coating" in context of the present invention means a layer or coating having beside its transparency, its adhesiveness and/or its typical paper or film properties one or more additional properties providing the final laminate with a certain desired functionality. For example, appropriate functionalities are UV-absorbing, UV-reflecting or UV-fluorescing properties as well as colouring properties.

In one embodiment of the invention after lamination of the transparent paper/film/paper laminate a transparent UV-absorbing layer is coated on one side of the laminate. This coating could be done by any conventional coating technique, e.g. meyer bar. Printing techniques like flexo or rotogravure printing could be used as well. Finally, the adhesive coating is applied on the functional coating layer, i.e. on the UV-absorbing layer.

The laminate having a transparent UV-absorbing layer according to the invention can be used for applications where transparent labels instead of striking opaque or even coloured labels are used up until now. The advantage of such a laminate is as follows: due to the UV-absorbing layer no UV-active colour resp. radiation could shine through the transparent label from underneath. Therefore an UV active bar-code printed on top of the label can be detected easily without any disturbances.

Suitable UV-absorbing agents comprise the families of cinnamates, hydroxybenzophenones, benzotriazoles and aminobutadienes or a combination thereof. One example for an UV-absorbing layer is a solvent based layer consisting of a benzotriazole derivative, preferably in an amount of 5-10 % by weight, and polyester based binders or binders typical for the use of Flexoprinting inks, e.g. nitrocelluose. Suitable benzotriazole derivatives are: 2-(2'-hydroxy-5'-methylphenyl)-benzotriazole, octyl-3-[3-tert.-butyl-4-hydroxy-5-(5-chloro-2H-benzotriazol-2-yl)-phenyl]propionate and 3-(3-(2H-benzotriazole-2yl)-5-t-butyl-4-hydroxyphenyl)-propionate. As an UV-reflecting agent finely dispersed titanium dioxide could be used, consisting an average particle size of appr. 17 nm and a specific surface area of appr. 70 m²/g. A combination of UV-reflecting and UV-absorbing layers could be used as well. UV-absorbing, resp. reflecting layers have absorption and/or reflection properties for light with wavelengths between 300 nm and 400 nm. The effectivity of this layer could be measured via UV-density according to ISO 5-2 Standards for transmission densitometry. UV-density values of more than 0.5 are suitable.

In another embodiment of the invention one or more of the film forming adhesive layers of the transparent laminate, e.g. of the paper/film/paper laminate, comprises UV-absorbing compound(s). Such a laminate has the mentioned additional functionality without having additional layer(s) or coating(s) compared to those embodiments of the invention not having the UV-absorbing functionality.

In still another embodiment of the invention the polymer film and/or the paper layer(s) of the transparent laminate have additional functionality(ies), e.g. the polymer film(s) are coloured film(s) and/or UV-absorbing films. Such a laminate also has the mentioned additional functionality without having additional layer(s) or coating(s) compared to those embodiments of the invention not having said functionality.

The polymer film of the adhesive transparent laminates of the invention can be water permeable or water impermeable, however, preferred are water impermeable polymer films. The water impermeable polymer films are typically made of polyolefine, e.g. polyethylene, polypropylene, or polyester, e.g. polyethylen-therephthalate, polyurethane, polyacrylate, polycarbonate, polyvinylchloride or polyamide, polyimide, polystyrene, cellulose acetates, biodegradable films (e.g. corn-starch or polyaminoacids based). These polymer film(s) are either non-oriented, unidirectionally oriented or biaxially oriented. Examples for these films are Mylar and Melinex biaxially oriented polyester film of DuPont, Valeron polyethylene film of VanLeer, cast polypropylene films, monoaxially oriented polypropylen films or biaxially oriented polypropylene films (BOPP). Further, the polymer films can also be a semipermeable film, so that water or solvent permeability is restricted, e.g. a film with small holes or a porous film. The polymer films can be precoated or pre-treated, e.g. by corona, flame or chemical treatment prior to lamination. For further details it is referred to EP 1 586 447 A1.

The polymer film itselve has a thickness in the range of 3 µm to 250 µm, preferably 9 µm to 70 µm, more preferably 12 µm to 50 µm. Thinner webs might be mechanically too weak. Thick webs up to 250 µm have still enough flexibility for the lamination process.

Generally, the polymer film is selected to yield high mechanical strength of the inventive laminates. The tensile strength of the laminate according to ISO2493 is typically between 40-3000 N/15mm. If biaxially oriented polymer films are used a high initial tear strength is achieved while tear propagation might be low. With uniaxially oriented polymer films high tear strength is achieved only in the cross direction to the orientation. Non-oriented polymer films are useful for both good initial tear resistance as well as good propagation tear.

The water impermeable polymer films can be treated inline in the lamination process by a corona discharge, a flame treatment or a chemical etching pretreatment, e.g. by a fluor treatment on one or both sides of the polymer film prior to adhesive coating. This pre-treatment is able to increase the surface tension and leads to improved wetting and adhesion of the water based film forming adhesive. It is commonly not necessary for already treated films. Polyolefine films, particularly polypropylene films, however, are critical to adhere and preferably are treated to ensure perfect bonding of the adhesive. For further details it is referred to EP 1 586 447 A1.

For certain applications a coloured, adhesive transparent laminate might be desired. Therefore, in certain embodiments of the invention the laminates may be coloured provided transparency is given in order to get finally a coloured transparent laminate. Colourfulness of the laminate can be reached by various material constructions. For example, in one embodiment one or more of the paper layer(s) are coloured paper(s). In another embodiment one or more of the polymer film(s) are coloured polymer film(s). In still another embodiment one or more of the film forming adhesive layers contain colouring agents. In a further embodiment a colouring agent can be added to one or more of the optional functional coating(s) which may be located between two layers or between a layer and the adhesive. Of course, combinations of the latter material constructions are also an option. For each of the described options it has to be provided that transparency is given in order to get finally a coloured transparent laminate.

The paper layer(s) as well can be water permeable or water semipermeable, however, water permeable papers are preferred. The water permeable papers can be made of paper, kraft paper, glassine or pergamin paper, food packaging paper or impregnated paper under the provision that the paper is translucent.

The paper layers of the laminates according to the present invention independently have a weight in the range of 10 to 80 g/m², preferably 12 to 60 g/m². The thickness of the paper layer(s) is typically in the range of 5 to 90 µm, preferably 10 to 70 µm. For the production of 3-ply paper/film/paper laminates different paper grades can be used for ply 1 and 3.

In an exemplary embodiment of the invention the laminates are manufactured according to a so-called roll-to-roil laminating process. According to this process the polymer film and the paper layers are permanently attached to each other by a film forming adhesive wherein the process comprises coating one side of one of the polymer films or paper layers with a film forming adhesive and contacting the adhesive side of the polymer film or the paper layer to the alternating polymer film or paper layer, respectively, or wherein the process comprises coating both sides of one of the polymer films or paper layers with a film forming adhesive and contacting each of the adhesive sides to one of the alternating polymer films or paper layers, respectively, on a transport roller while the combined films and layers are touching the transport roller from one side on a length of more than 5 mm without being further pressurised. For further details of this roll-to-roll laminating process, especially with respect to the film forming adhesive composition and its coating conditions, with respect to the paper layer(s) and its preferred properties, with respect to the polymer film and its preferred properties and with respect to further (optional) components and conditions in the said process it is referred to EP 1 586 447 A1. Besides this special wet laminating process any conventional wet or dry lamination process could be used for the production of 3-ply paper/film/paper laminates. Suitable adhesives for the dry lamination process could be acrylic or ethylene vinyl acetate based polymers or copolymers either solvent or water based, one- or two-component systems, solvent free one- or two-component based adhesive acrylic/polyurethane based systems, adhesives cured by UV-radiation or electron beam radiation and hot melt based on ethylenevinylacetate, amorphous poly-alpha-olefines or styrene isoprene/styrene butadiene based polymers systems.

The final adhesive transparent laminates of the invention having optionally the described further functional properties are useful for but not limited to the following applications: tags, tickets, labels, envelopes, sealing tapes, baggage tags, graphic application and packaging material.

### Examples

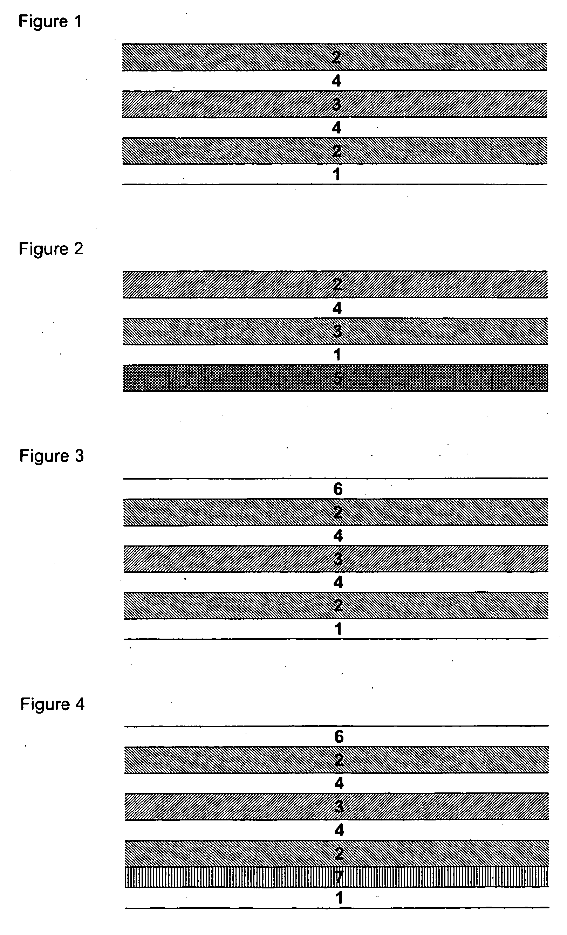

Example 1 (schematically shown in figure 1): A transparent 3-ply paper/film/paper laminate is produced in the first step according to the production process described in EP 1 586 447 A1 by using 2-plys of 32 g Cristal Evolution paper (2) from Ahlstrom and one ply of a 40 µm biaxially oriented polypropylene film (3) and a water based acrylic film forming lamination adhesive (4). In the second step a removable pressure sensitive adhesive layer based on an acrylic dispersion (1) is coated on one paper side of the laminate with a dry coating weight of 5 g/m². In the same production step the reverse side is coated with water. The resulting adhesive transparent laminate has a good flatness of appr. 15 mm measured according to DIN-6723, release values of appr. 100 cN/50mm according to FTM3 and a transparency of 68 % according to ISO2471. The peel strength according to FTM1 is 1.75 N/25mm (glass)

Comparative Example 2: A transparent 80 g/m² paper is coated with the same acrylic water based removable adhesive layer as mentioned in example 1. Even with a water coating in the same production step on the reverse paper side, as described in example 1 the resulting curl according to DIN-6723 gives values of greater than 50 mm and therefore is unacceptably high.

Example 3 (schematically shown in figure 2, not according to the invention): Transparent 2-ply paper/film laminate with a permanent solvent based pressure sensitive adhesive (1) on the filmic side (2): In the first production step the 2-ply laminate is produced according to EP 1 586 447 A1. In the second production step a 62 g/m² white glassine siliconized release liner is coated with a solvent based pressure sensitive acrylic adhesive (4) with a coating weight of appr. 20 g/m²; the solvents are removed via hot air drying and the filmic side (3) of the 2-ply paper/film laminate is laminated to the adhesive coated release liner (5). The resulting laminate has an overall flatness of 15 mm according to DIN 6723, a good adhesion of the adhesive to the film and after removal of the release liner a transparency of 72 % according to ISO2471. The peel strength according to FTM1 is appr. 13.5N/25mm (glass).

Example 4 (schematically shown in figure 3): Transparent 3-ply paper/film/paper laminate with a removable water based pressure sensitive adhesive (1). In variation to example 1 the reverse side is not coated with water but with a release coating (6) based on a mixture of polyamides and amide waxes The laminate has release values of appr. 40 cN/50mm according to FTM3, a curl of 15 mm according to DIN-6723, and a transparency of 65 % according to ISO2471. The peel strength according to FTM1 is appr. 2.2N/25mm (glass).

Example 5 (schematically shown in figure 4): A transparent 3-ply paper/film/paper laminate produced according to EP 1 586 447 A1 is coated in the first production step with a UV-absorbing layer (7). The UV-absorbing layer is solvent based and consists of 2-(2'-hydroxy-5'-methylphenyl)benzotriazole in an amount of 10 % by weight relating to nitrocellulosic based binder used in a flexgraphic printing ink. The layer is coated via flexographic printing with a dry coating weight of 3-4 g/m². In the second production step the UV-absorbing layer (7) is coated with a water based removable pressure sensitive adhesive (1), coating weight 10 g/m². In the same production step the reverse side is coated with a release coating (6). The final laminate has an overall flatness of appr. 7 mm according to DIN 6723, a transparency of 63 % according to ISO2471 and release values of 20 cN/50 mm according to FTM3. The UV-density of the overall laminate measured with X-rite 361 T densitometer is between 0.5-0.7.

Example 6 (schematically shown in figure 1): Transparent 3-ply paper/film/paper laminate with a cold seal adhesive. The 3-ply paper/film/paper laminate is produced according to EP 1 586 447 A1. In the second production step a cold seal adhesive (1) is coated on one paper side (2) with a coating weight of appr. 10 g/m². After conversion into tags the so produced material has high peel strength when two adhesive sides are pressed against each other, acceptable flatness properties of appr. 15 mm according to DIN6723 and a transparency of 63 % according to ISO2471.

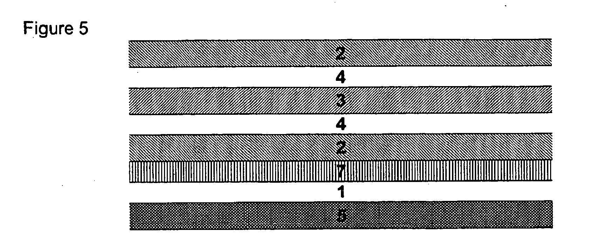

Example 7 (schematically shown in figure 5): A 3-ply paper/film/paper laminate is produced in the first step according to EP 1 586 447 A1. In the second step a red coloured, transparent flexoprinting ink is coated on one paper side via flexo printing (7). In the third production step a 62 g/m² white siliconized glassine release liner (5) is coated with a solvent based pressure sensitive acrylic adhesive with a coating weight of appr. 20 g/m². The solvent is removed via hot air drying and the paper side (2) with the red coloured layer (7) is laminated to the adhesive (1) coated release liner (5). The resulting red coloured laminate has an overall flatness of 15 mm according to DIN-6723, and a transparency of 58 % according to ISO2471.

## Claims

1. An adhesive transparent 3-ply laminate comprising an adhesive layer (1), one polymer film (3) and two paper layers (2), the polymer film (3) and the paper layers (2) being in an alternating manner permanently attached to each other by a film forming adhesive (4), wherein the laminate has a minimum transparency of 60% according to ISO 2471.

2. The laminate according to claim 1, wherein the adhesive layer (1) is a permanent or removable pressure sensitive adhesive layer, a cold seal or a hot seal adhesive layer.

3. The laminate according to any of the preceding claims, wherein the adhesive layer is only partially disposed on the laminate surface.

4. The laminate according to any of the preceding claims, wherein the adhesive layer (1) is protected with a release liner (5).

5. The laminate according to any of the preceding claims, further comprising a release coating (6) on that side of the laminate not having the adhesive layer (1)

6. The laminate according to any of the preceding claims, wherein the laminate comprises one or more functional layer(s) and/or coating(s).

7. The laminate according to claim 6, wherein the functional layer(s) is/are UV-absorbing, UV-reflecting, UV-fluorescing or coloured layers.

8. The laminate according to claim 7, wherein the polymer film (3) is a coloured film or UV-absorbing film.

9. A laminate according to claims 7 or 8, where the UV-density of the overall laminate according to ISO 5-2 standards for transmission densitometry has a minimum of 0.5.

10. The laminate according to claim 7, wherein the paper layers (2) are coloured papers.

11. Use of the laminate according to any of the preceding claims in any kind of tags, tickets, labels, cards, envelopes, sealing tapes, baggage tags, graphic application and packaging material.

## Patentansprüche

1. Klebendes transparentes 3-lagiges Laminat, umfassend eine Klebschicht (1), eine Polymerfolie (3) und zwei Papierschichten (2), wobei die Polymerfolie (3) und die Papierschichten (2) in abwechselnder Anordnung dauerhaft miteinander durch einen filmformenden Klebstoff (4) verbunden sind und wobei das Laminat eine minimale Transparenz von 60% gemäß ISO 2471 aufweist.

2. Laminat gemäß Anspruch 1, wobei die Klebschicht (1) eine Schicht eines dauerhaften oder entfernbaren Haftklebers oder eine Schicht eines Kaltsiegel- oder Heißsiegelklebers ist.

3. Laminat gemäß einem der vorhergehenden Ansprüche, wobei die Klebschicht nur teilweise auf der Laminatoberfläche angeordnet ist.

4. Laminat gemäß einem der vorhergehenden Ansprüche, wobei die Klebschicht (1) mit einem Trägermaterial (5) geschützt ist.

5. Laminat gemäß einem der vorhergehenden Ansprüche, das ferner eine Trennbeschichtung (6) auf der Seite des Laminats aufweist, die nicht die Klebschicht (1) hat.

6. Laminat gemäß einem der vorhergehenden Ansprüche, wobei das Laminat eine oder mehrere funktionelle Schichten und/oder Beschichtungen aufweist.

7. Laminat gemäß Anspruch 6, wobei die funktionelle Schicht(en) UV-absorbierende, UV-reflektierende, UV-fluoreszierende oder farbige Schicht(en) sind.

8. Laminat gemäß Anspruch 7, wobei die Polymerfolie (3) eine farbige Folie oder UV-absorbierende Folie ist.

9. Laminat gemäß Anspruch 7 oder 8, wobei die UV-Dichte des gesamten Laminats gemäß ISO 5-2 Standards für Transmissionsdensitometrie ein Minimum von 0,5 aufweist.

10. Laminat gemäß Anspruch 7, wobei die Papierschichten (2) farbige Papiere sind.

11. Verwendung des Laminats gemäß einem der vorhergehenden Ansprüche in jeder Art von Anhängern, Tickets, Etiketten, Karten, Hüllen, Klebebändern, Gepäckanhängern, graphischer Anwendung und Verpackungsmaterial.

## Revendications

1. Stratifié adhésif transparent à 3 épaisseurs comprenant une couche adhésive (1), un film polymère (3) et deux couches de papier (2), le film polymère (3) et les couches de papier (2) étant fixés entre eux de manière alternée et permanente par un adhésif (4) formant film, dans lequel le stratifié a une transparence minimum de 60 % selon la norme ISO 2471.

2. Stratifié selon la revendication 1, dans lequel la couche adhésive (1) est une couche adhésive permanente ou amovible sensible à la pression, une couche adhésive pouvant être thermosoudée à froid ou thermosoudée à chaud.

3. Stratifié selon l'une quelconque des revendications précédentes, dans lequel la couche adhésive est uniquement disposée de manière partielle sur la surface du stratifié.

4. Stratifié selon l'une quelconque des revendications précédentes, dans lequel la couche adhésive (1) est protégée avec un revêtement amovible (5).

5. Stratifié selon l'une quelconque des revendications précédentes, comprenant en outre un revêtement amovible (6) sur ce côté du stratifié qui ne comprend pas la couche adhésive (1).

6. Stratifié selon l'une quelconque des revendications précédentes, dans lequel le stratifié comprend une ou plusieurs couches fonctionnelles et/ou revêtements.

7. Stratifié selon la revendication 6, dans lequel la(les) couche(s) fonctionnelle(s) est/sont des couches absorbant les UV, réfléchissant les UV, fluorescentes aux UV ou colorées.

8. Stratifié selon la revendication 7, dans lequel le film polymère (3) est un film coloré ou un film absorbant les UV.

9. Stratifié selon les revendications 7 ou 8, dans lequel la densité d'UV du stratifié dans son ensemble selon les normes ISO 5-2 pour la densitométrie de transmission a un minimum de 0,5.

10. Stratifié selon la revendication 7, dans lequel les couches de papier (2) sont des papiers colorés.

11. Utilisation du stratifié selon l'une quelconque des revendications précédentes dans n'importe quel type d'étiquettes, de tickets, d'étiquettes adhésives, de cartes, d'enveloppes, de bandes d'étanchéité, d'étiquettes pour les bagages, d'application graphique et de matériau d'emballage.
